(19) Europäisches Patentamt
European Patent Office
Office européen des brevets

(11) **EP 4 495 170 A1**

(12) **EUROPEAN PATENT APPLICATION**
published in accordance with Art. 153(4) EPC

(43) Date of publication:
**22.01.2025 Bulletin 2025/04**

(21) Application number: **23770936.5**

(22) Date of filing: **20.03.2023**

(51) International Patent Classification (IPC):
**C08J 9/04** (2006.01)   **C09J 7/26** (2018.01)

(52) Cooperative Patent Classification (CPC):
**C08J 9/04; C09J 7/26**

(86) International application number:
**PCT/JP2023/010863**

(87) International publication number:
**WO 2023/176984 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.03.2022  JP 2022043917**

(71) Applicant: **SEKISUI CHEMICAL CO., LTD.**
**Osaka-shi**
**Osaka**
**530-8565 (JP)**

(72) Inventor: **HAMADA, Masahiro**
**Tokyo 105-8566 (JP)**

(74) Representative: **Ter Meer Steinmeister & Partner**
**Patentanwälte mbB**
**Nymphenburger Straße 4**
**80335 München (DE)**

(54) **FOAM SHEET AND ADHESIVE TAPE**

(57)    The foam sheet of the present invention has a stress relaxation ratio of 23% or more and a 25% compressive strength of 1,000 kPa or less. The pressure-sensitive adhesive tape of the present invention includes the foam sheet of the present invention and a pressure-sensitive adhesive material provided on at least one surface of its multilayered foam sheet. The present invention can provide a foam sheet that can increase a permanent strain and a pressure-sensitive adhesive tape including the foam sheet.

Fig. 1

**Description**

Technical Field

The present invention relates to a foam sheet and a pressure-sensitive adhesive tape including the foam sheet.

Background Art

In electronic devices such as mobile phones, cameras, displays, game devices, electronic notebooks, and personal computers, a pressure-sensitive adhesive tape using a foam sheet is widely used as a sealing material or an impact absorbing material. As a foam that is used in the pressure-sensitive adhesive tape used as such a sealing material or an impact absorbing agent, for example, the acrylic foam described in PTL1 is known. The pressure-sensitive adhesive tape using this acrylic foam can be suitably used as sealing materials or impact absorbing materials.

Citation List

Patent Literature

PTL1: JP 2012-519750 A

Summary of Invention

Technical Problem

In recent years, electronic devices with curved surfaces have been sold from the viewpoint of design. In such electronic devices, when a pressure-sensitive adhesive tape using a foam sheet is used as a sealing material or an impact absorbing material, the pressure-sensitive adhesive tape may be pasted on the curved surface to fix a member. In this case, the pressure-sensitive adhesive tape is required to have flexibility so that it can follow the curved surface, but problems such as lifting on the fixed member may occur due to variation in the tolerance of the curved surface.

As a result of extensive researches to solve the above problem, the present inventors found that problems such as lifting on the fixed member can be solved by achieving a flexibility and further increasing a permanent strain of the foam sheet. Therefore, an object of the present invention is to provide a foam sheet that can increase the permanent strain and a pressure-sensitive adhesive tape including the foam sheet.

Solution to problem

The present inventors have conducted extensive researches into the permanent strain of a foam sheet. As a result, they found that the above-mentioned problems can be solved by increasing a stress relaxation ratio and decreasing a 25% compressive strength of the foam sheet, and completed the following present invention.

That is, the present invention is to provide the following [1] to [10].

[1] A foam sheet having a stress relaxation ratio of 23% or more and a 25% compressive strength of 1,000 kPa or less.
[2] The foam sheet according to [1], having an interlaminar strength of 0.6 MPa or more.
[3] The foam sheet according to [1] or [2], having a closed cell ratio of 80% or more.
[4] The foam sheet according to any one of [1] to [3] having a gel fraction of 30 to 80%.
[5] The foam sheet according to any one of [1] to [4], wherein a larger oblateness of an oblateness of MD and an oblateness of TD of a cell is 2 or more.
[6] The foam sheet according to any one of [1] to [5], having a density of 0.05 to 0.6 g/cm$^3$.
[7] The foam sheet according to any one of [1] to [6], having a thickness of 0.03 to 2 mm.
[8] The foam sheet according to any one of [1] to [7], wherein a temperature indicating a local maximum value of a loss tangent (tan$\delta$) of a dynamic viscoelasticity falls at least one within a range of 15 to 50°C.
[9] The foam sheet according to any one of [1] to [8], wherein a local maximum value of a loss tangent (tan$\delta$) of a dynamic viscoelasticity is 0.2 or more.
[10] A pressure-sensitive adhesive tape comprising the foam sheet according to any one of [1] to [9] above, and a pressure-sensitive adhesive material provided on at least one surface of the foam sheet.

Advantageous Effects of Invention

According to the present invention, it is possible to provide a foam sheet that can increase the permanent strain and a pressure-sensitive adhesive tape including the foam sheet.

Brief Description of Drawing

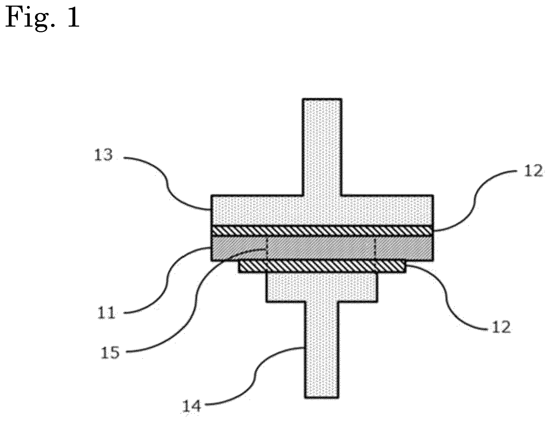

[Fig. 1] Fig. 1 is a schematic view showing an apparatus for measuring an interlaminar strength.

Description of Embodiments

Hereinafter, the present invention will be described in more detail by way of embodiments.

[Foam sheet]

The foam sheet of the present invention has a stress relaxation ratio of 23% or more and a 25% compressive strength of 1,000 kPa or less. This makes it possible to increase the permanent strain of the foam sheet. In addition, according to this, even when there is variation in the tolerance of a curved surface to which the pressure-sensitive adhesive tape including the foam sheet is pasted, occurrence of problems such as lifting on a member fixed using the pressure-sensitive adhesive tape can be prevented.

(Stress relaxation ratio)

The stress relaxation ratio of the foam sheet of the present invention is 23% or more. When the stress relaxation of the foam sheet is less than 23%, the permanent strain of the foam sheet becomes insufficient, and the foam sheet may not sufficiently alleviate variation in the tolerance of a curved surface. As a result, problems such as lifting on a member fixed using the pressure-sensitive adhesive tape including the foam sheet may occur. From the viewpoint of this, the stress relaxation ratio of the foam sheet of the present invention is preferably 25% or more, more preferably 27% or more, still more preferably 30% or more, even still more preferably 33% or more, yet still more preferably 35% or more. The upper limit of the range of the stress relaxation ratio of the foam sheet of the present invention is not particularly limited, but is 60% from the viewpoint of sealability. Note that, the stress relaxation ratio of the foam sheet can be measured by the method described in Examples later. In addition, the stress relaxation ratio of the foam sheet can be controlled by adjusting, for example, the kind of a resin constituting the foam sheet and its rate, the oblateness of a cell, the thickness of the foam sheet, the density of the foam sheet, the local maximum value and the temperature indicating the local maximum value (glass transition temperature (Tg)) of loss tangent (tan$\delta$) of the dynamic viscoelasticity of the foam sheet.

(25% Compressive strength)

The 25% compressive strength of the foam sheet of the present invention is 1,000 kPa or less. When the 25% compressive strength of the foam sheet is larger than 1,000 kPa, the foam sheet may not sufficiently follow a curved surface. As a result, problems such as peeling tape from a member fixed using the pressure-sensitive adhesive tape including the foam sheet may occur. From the viewpoint of this, the 25% compressive strength of the foam sheet is preferably 700 kPa or less, more preferably 500 kPa or less, and still more preferably 200 kPa or less. The lower limit of the range of the 25% compressive strength of the foam sheet of the present invention is not particularly limited, but is generally 5 kPa. Note that, the 25% compressive strength of the foam sheet can be measured by the method described in Examples later. In addition, the 25% compressive strength of the foam sheet can be controlled by adjusting, for example, the kind of a resin constituting the foam sheet and its rate, the oblateness of a cell, the thickness of the foam sheet, the density of the foam sheet, the local maximum value and the temperature indicating the local maximum value (glass transition temperature (Tg)) of loss tangent (tan$\delta$) of the dynamic viscoelasticity of the foam sheet.

(Interlaminar strength)

The interlaminar strength of the foam sheet of the present invention is preferably 0.6 MPa or more. In the case where the interlaminar strength of the foam sheet is 0.6 MPa or more, when the foam sheet is used for a pressure-sensitive adhesive tape, the strength of the pressure-sensitive adhesive tape can be increased. As a result, the pressure-sensitive adhesive tape can be prevented from being damaged by an impact from the outside. From the viewpoint of this, the interlaminar strength of the foam sheet is more preferably 1.0 MPa or more, still more preferably 1.5 MPa or more. The upper limit of the range of the interlaminar strength of the foam sheet of the present invention is not particularly limited, but is generally 10 MPa. Note that, the interlaminar strength of the foam sheet can be measured by the method described in Examples later. In addition, the interlaminar strength of the foam sheet can be controlled by adjusting, for example, the kind of a resin constituting the foam sheet and its rate, the oblateness of a cell, the thickness of the foam sheet, the density of the foam sheet, the local maximum value and the temperature indicating the local maximum value (glass transition temperature (Tg)) of loss tangent (tan$\delta$) of the dynamic viscoelasticity of the foam sheet.

(Closed cell ratio)

The closed cell ratio of the foam sheet of the present invention is preferably 80% or more. In the case where the closed cell ratio of the foam sheet is 80% or more, when the foam sheet is used for a sealing material, a dust-proof property and a waterproof property of the foam sheet can be improved. From the viewpoint of this, the closed cell ratio of the foam sheet is more preferably 90% or more, still more preferably 95% or more. The upper limit of the range of the closed cell ratio of the foam sheet of the present invention is not particularly limited, but is generally 100%. Note that, the closed cell ratio of the foam sheet can be measured by the method described in Examples later.

(Gel fraction)

The gel fraction of the foam sheet of the present invention is preferably 30 to 80%. When the gel fraction of the foam sheet is 30 to 80%, cells of the foam sheet can be small, and the interlaminar strength can be improved. From the viewpoint of this, the gel fraction of the multilayer foam sheet is more preferably 35 to 70%, still more preferably 40 to 65%. Note that, the gel fraction of the foam sheet can be measured by the method described in Examples later.

(Oblateness of cell)

A larger oblateness of an oblateness of MD and an oblateness of TD of a cell of the foam sheet of the present invention is preferably 2 or more. In the present specification, the "MD" means Machine Direction and is a direction corresponding to, for example, an extrusion direction of a sheet. The "TD" means Transverse Direction and is a direction, which is orthogonal to the MD and is parallel to a surface of a sheet. When a larger oblateness is 2 or more of the oblateness of MD and the oblateness of TD of a cell, the restoring forces of the cell in a thickness direction decrease. According to this, the stress relaxation ratio of the foam sheet of 23% or more is easily achieved. From the viewpoint of this, a larger oblateness of an oblateness of MD and an oblateness of TD of a cell is more preferably 3 or more, still more preferably 4 or more. Note that, the oblateness of MD and the oblateness of TD of the cell of the foam sheet can be measured by the method described in Examples later. In addition, during the production of the foam sheet, the oblateness of the MD and the oblateness of the TD of the cell of the foam sheet can be adjusted by stretching the foam sheet in at least one direction of the MD and the TD. Moreover, from the viewpoint of the stress relaxation ratio of the foam sheet, both the oblateness of the MD and the oblateness of the TD of the cell are more preferably 2 or more.

(Average cell size)

The average cell size of the foam sheet of the present invention is preferably 5 to 400 $\mu$m. As described later, the foam sheet may be used in any shape, but preferably has a thin width. In the case where the average cell size of the foam sheet is 10 to 300 $\mu$m, even when the foam sheet has a thin width, the waterproof property of the foam sheet can be sufficiently secured. From the viewpoint of this, the average cell size of the foam sheet of the present invention is more preferably 10 to 250 $\mu$m, still more preferably 10 to 200 $\mu$m. Note that, the average cell size of the foam sheet can be measured by the method described in Examples later. The average cell size used herein is an average value of average cell sizes of MD and TD.

(Density)

When the density of the foam sheet of the present invention is preferably 0.05 to 0.6 g/cm³. When the density of the foam sheet is 0.05 to 0.6 g/cm³, the stress relaxation ratio of the foam sheet of 23% or more and the 25% compressive strength of the foam sheet of 1,000 kPa or less are more easily achieved. From the viewpoint of this, the density of the foam sheet of the present invention is more preferably 0.07 to 0.57 g/cm³, still more preferably 0.10 to 0.55 g/cm³. Note that, the density of the foam sheet can be measured by the method described in Examples later.

(Expansion ratio)

The expansion ratio of the foam sheet of the present invention is preferably 1.5 folds or more. When the expansion ratio of the foam sheet is 1.5 folds or more, the stress relaxation ratio of the foam sheet of 23% or more and the 25% compressive strength of the foam sheet of 1,000 kPa or less are more easily achieved. From the viewpoint of this, the expansion ratio of the foam sheet of the present invention is more preferably 4 folds or more, still more preferably 5 folds or more. The upper limit of the range of the expansion ratio of the foam sheet of the present invention is not particularly limited, but is generally 30 folds, and is preferably 20 folds. Note that, the expansion ratio of the foam sheet can be measured by the method described in Examples later.

(Thickness)

The thickness of the foam sheet of the present invention is preferably 0.03 to 2 mm. When the thickness of the foam sheet is 0.03 to 2 mm, the stress relaxation ratio of the foam sheet of 23% or more and the 25% compressive strength of the foam sheet of 1,000 kPa or less are more easily achieved. From the viewpoint of this, the thickness of the foam sheet of the present invention is more preferably 0.05 to 1.5 mm, still more preferably 0.07 to 1 mm. Note that, the thickness of the foam sheet can be measured by the method described in Examples later.

(Loss tangent (tan$\delta$))

The temperature indicating a local maximum value of a loss tangent (tan$\delta$) of a dynamic viscoelasticity in the foam sheet of the present invention preferably falls at least one within a range of at least 15 to 50°C. When the temperature indicating the local maximum value of the tan$\delta$ of the dynamic viscoelasticity in the foam sheet falls at least one within a range of at least 15 to 50°C, the stress relaxation ratio of the foam sheet of 23% or more is more easily achieved. From the viewpoint of this, the temperature indicating the local maximum value of the loss tangent (tan$\delta$) of the dynamic viscoelasticity more preferably falls at least one within a range of at least 15 to 47°C, still more preferably falls at least one within a range of 23 to 43 °C. Note that, the tan$\delta$ of the foam sheet is a loss tangent obtained by measuring the dynamic viscoelasticity at a measurement frequency of 10 Hz. The tan$\delta$ is a ratio (G"/G') of the loss shearing elastic modulus (G") to the storage shearing elastic modulus (G') and shows how much energy a material absorbs (how much it is changed into heat) when the material is deformed. Note that, the temperature indicating the local maximum value of the loss tangent (tan$\delta$) of the dynamic viscoelasticity of the foam sheet is generally a glass transition temperature (Tg) of the foam sheet.

The local maximum value of the loss tangent (tan$\delta$) in the foam sheet of the present invention is preferably 0.2 or more. When the tan$\delta$ of the foam sheet is 0.2 or more, the stress relaxation ratio of the foam sheet of 23% or more is more easily achieved. From the viewpoint of this, the local maximum value of the tan$\delta$ of the foam sheet of the present invention is more preferably 0.3 or more, still more preferably 0.4 or more. In addition, the upper limit of the range of the local maximum value of the tan$\delta$ of the foam sheet of the present invention is not particularly limited, but is generally 3. Note that, regarding the local maximum value used herein, a temperature indicating the local maximum value may fall within a range of 15 to 50°C.

Note that, the local maximum value and the temperature indicating the local maximum value of the tan$\delta$ of the foam sheet can be measured by the method described in Examples later. The local maximum value of the tan$\delta$ of the foam sheet, the number of local maximum values of the tan$\delta$, and the temperature indicating the local maximum value of the tan$\delta$ can be controlled by adjusting, for example, the kind of a resin constituting the foam sheet and its rate, the oblateness of a cell, the thickness of the foam sheet, the density of the foam sheet, the oblateness of a cell, the thickness of the foam sheet, and the density of the foam sheet.

[Resin constituting foam sheet]

The foam sheet of the present invention may contain an elastomer (A), but preferably contains an elastomer (A) and a polyolefin resin (B). Use of an elastomer and a polyolefin resin makes it easy to achieve the stress relaxation ratio of the foam sheet of 23% or more and the 25% compressive strength of 1,000 kPa or less in the foam sheet.

(Elastomer (A))

Examples of the elastomer (A) include thermoplastic elastomers, ethylene-$\alpha$-olefin copolymer rubbers, and amorphous 4-methyl-1 pentene copolymers. Examples of the thermoplastic elastomers include thermoplastic olefin elastomers, thermoplastic styrene elastomers, thermoplastic vinyl chloride elastomers, thermoplastic polyurethane elastomers, thermoplastic polyester elastomer, and thermoplastic polyamide elastomers. The elastomer (A) may use these components individually by one type or may use two or more of them in combination.

Among these, thermoplastic olefin elastomers, thermoplastic styrene elastomers, ethylene-$\alpha$-olefin copolymer rubbers, and amorphous 4-methyl-1 pentene copolymers are preferable, thermoplastic styrene elastomers and amorphous 4-methyl-1 pentene copolymers are more preferable, and thermoplastic styrene elastomers are still more preferable.

<Thermoplastic olefin elastomer>

A thermoplastic olefin elastomer (TPO) generally has a polyolefin such as polyethylene and polypropylene as a hard segment and has a rubber component such as butyl rubber, halobutyl rubber, EPDM (ethylene-propylene-diene rubber), EPM (ethylene-propylene rubber), NBR (acrylonitrile-butadiene rubber), and natural rubber as a soft segment. As the thermoplastic olefin elastomer (TPO), any of blend type, dynamic crosslinking type, and polymerization type can be used.

Preferred specific examples of the rubber component include EPM and EPDM, as mentioned above, and EPDM is particularly preferable. Examples of EPDM include ethylene-propylene-5-ethylidene-2-norbornene copolymer rubber and ethylene-propylene-dicyclopentadiene copolymer rubber. Among these, ethylene-propylene-dicyclopentadiene copolymer rubber is preferable.

Further, a block copolymer type is also mentioned as a thermoplastic olefin elastomer. Examples of the block copolymer type include those having a crystalline block and a soft segment block, more specifically, crystalline olefin block-ethylene/butylene copolymer-crystalline olefin block copolymer (CEBC). In CEBC, the crystalline olefin block is preferably a crystalline ethylene block, and examples of a commercially available product of CEBC include "DYNARON 6200P", available from JSR Corporation.

<Thermoplastic styrene elastomer>

Examples of the thermoplastic styrene elastomer include a block copolymer having a styrene polymer or copolymer block and a conjugated diene compound polymer or copolymer block. Examples of the conjugated diene compound include isoprene and butadiene.

The thermoplastic styrene elastomer used in the present invention may or may not be hydrogenated but is preferably hydrogenated. When it is hydrogenated, hydrogenation can be performed by a well-known method.

Thermoplastic styrene elastomers are generally block copolymers such as styrene-isoprene block copolymer (SI), styrene-isoprene-styrene block copolymer (SIS), styrene-butadiene block copolymer (SB), styrene-butadiene-styrene block copolymer (SBS), styrene-ethylene/butylene-styrene block copolymer (SEBS), styrene-ethylene/propylene-styrene block copolymer (SEPS), styrene-ethylene/ethylene/propylene-styrene block copolymer (SEEPS), styrene-ethylene/butylene block copolymer (SEB), styrene-ethylene/propylene block copolymer (SEP), and styrene-ethylene/-butylene-crystalline olefin block copolymer (SEBC).

As the above thermoplastic styrene elastomer, a block copolymer is preferable. Among these, SIS, SEBS, SEPS, SEEPS, and SEBC are more preferable, SEEPS and SEBS are more preferable, and SIS and SEBS are particularly preferable.

Examples of a commercially available product of SIS include product name "HYBRAR (registered trademark) 5125" (styrene content 20 mass%, Tg = -13°C) and product name "HYBRAR (registered trademark) 5127" (styrene content 20 mass%, Tg = 8°C) available from Kuraray Co., Ltd. Examples of a commercially available product of SEBS include TUFTEC (registered trademark) series and S.O.E. (registered trademark) series available from Asahi Kasei Corp.

The thermoplastic styrene elastomers can enhance the impact resistance of the foam sheet by having styrene-derived structural units. The styrene content in a thermoplastic styrene elastomer is preferably 5 to 50 mass%. When the styrene content falls within such a range, excellent impact resistance is obtained. Further, when it is the aforementioned upper limit or less, the compatibility with the polyolefin resin (B), which will be described later in detail, becomes good, and the crosslinkability and foamability tend to be good. From these viewpoints, the styrene content in a thermoplastic styrene elastomer is more preferably 7 to 40 mass% and further preferably 7 to 30 mass%.

The number-average molecular weight of the thermoplastic styrene elastomer is not specifically limited but is preferably 30,000 to 800,000, more preferably 120,000 to 180,000, in view of the strength at break and processability.

The number-average molecular weight is a value converted into polystyrene measured using gel permeation chromatography (GPC).

<Ethylene-$\alpha$-olefin copolymer rubber>

Examples of the $\alpha$-olefin used for the ethylene-$\alpha$-olefin copolymer rubber include one or more $\alpha$-olefins having 3 to 15 carbon atoms, preferably having 3 to 10 carbon atoms, such as propylene, 1-butene, 2-methyl propylene, 3-methyl-1-butene, 1-pentene, 1-hexene, 4-methyl-1-pentene, and 1-octene. Among these, propylene and 1-butene are preferable, and 1-butene is more preferable.

The ethylene-$\alpha$-olefin copolymer rubber used here is an amorphous or low crystalline rubber-like substance in which two or more olefin monomers are copolymerized substantially at random.

The ethylene-α-olefin copolymer rubber may have other monomer units in addition to ethylene units and α-olefin units.

Examples of monomers forming the other monomer units include conjugated dienes having 4 to 8 carbon atoms such as 1,3-butadiene, 2-methyl-1,3-butadiene (isoprene), 1,3-pentadiene, and 2,3-dimethyl-1,3-butadiene, non-conjugated dienes having 5 to 15 carbon atoms such as dicyclopentadiene, 5-ethylidene-2-norbornene, 1,4-hexadiene, 1,5-dicyclooctadiene, 7-methyl-1,6-octadiene, and 5-vinyl-2-norbornene, vinyl ester compounds such as vinyl acetate, unsaturated carboxylic acid esters such as methyl acrylate, ethyl acrylate, butyl acrylate, methyl methacrylate, and ethyl methacrylate, and unsaturated carboxylic acids such as acrylic acid and methacrylic acid. These monomers can be used alone, or two or more of them can be used in combination. Among these, non-conjugated dienes having 5 to 15 carbon atoms are preferable, and 5-ethylidene-2-norbornene, 1,4-hexadiene, and dicyclopentadiene (DCPD) are more preferable in view of availability.

The content of ethylene units in the ethylene-α-olefin copolymer rubber is generally 30 to 85 mass%, preferably 40 to 80 mass%, more preferably 45 to 75 mass%. Further, the content of α-olefin units having 3 to 15, preferably, 3 to 10 carbon atoms such as propylene is generally 10 to 60 mass%, preferably 15 to 50 mass. The content of the other monomer units such as non-conjugated dienes is generally 0 to 20 mass%, preferably 1 to 10 mass%.

As the ethylene-α-olefin copolymer rubber, ternary copolymers such as EPDM (ethylene-propylene-diene rubber) and EBDM (ethylene-butene-1-diene rubber) are preferable. Examples of the ethylene-α-olefin copolymer include "EBT K-9330", available from Mitsui Chemicals, Inc.

<Amorphous 4-methyl-1 pentene copolymer>

Examples of the amorphous 4-methyl-1 pentene copolymer include copolymers of 4-methyl-1 pentene with α-olefins other than 4-methyl-1 pentene. Examples of the α-olefins include α-olefins having 2 to 20 carbon atoms, preferably ethylene, propylene, 1-butene, 1-pentene, 1-hexene, 1-octene, or 1-decene, more preferably ethylene or propylene. Among these, 4-methyl-1 pentene/propylene copolymer is preferable.

Examples of the amorphous 4-methyl-1 pentene copolymer include "EP1001" and "EP1013" available from Mitsui Chemicals, Inc.

(Polyolefin resin (B))

The polyolefin resin is a thermoplastic resin, and specific examples thereof include polyethylene resins, polypropylene resins, polybutene resins, and ethylene-vinyl acetate copolymers. Among these, polyethylene resins are preferable.

Further, as a polyethylene resin, low density polyethylene (LDPE) is preferable, and linear low density polyethylene (LLDPE) is more preferable. Accordingly, use of a thermoplastic styrene elastomer as the elastomer (A) and use of LLDPE as the polyolefin resin (B) is particularly preferable.

Further, examples of the polyethylene resin include polyethylene resins polymerized with polymerization catalysts such as Ziegler-Natta catalysts, metallocene catalysts, and chromium oxide compounds, and polyethylene resins polymerized with metallocene catalysts are preferably used.

(Metallocene catalyst)

Examples of the metallocene catalysts can include compounds such as bis(cyclopentadienyl) metal complexes having a structure in which a transition metal is sandwiched between π electron unsaturated compounds. More specifically, examples thereof can include compounds in which one or more cyclopentadienyl rings or analogs thereof are present as ligands in tetravalent transition metals such as titanium, zirconium, nickel, palladium, hafnium, and platinum.

Such metallocene catalysts have uniform properties of active sites and each active site has the same activity. Since polymers synthesized using metallocene catalysts have high uniformities in molecular weight, molecular weight distribution, composition, composition distribution, and the like, crosslinking uniformly proceeds when sheets containing polymers synthesized using metallocene catalysts are crosslinked. Since the uniformly crosslinked sheets uniformly foam, it is easy to stabilize the physical properties. Further, since they can be uniformly stretched, the thickness of foams can be uniform.

Examples of ligands can include cyclopentadienyl rings and indenyl rings. Such a cyclic compound is optionally substituted with a hydrocarbon group, a substituted hydrocarbon group, or a hydrocarbon-substituted metalloid group. Examples of the hydrocarbon group include a methyl group, an ethyl group, various propyl groups, various butyl groups, various amyl groups, various hexyl groups, 2-ethylhexyl group, various heptyl groups, various octyl groups, various nonyl groups, various decyl groups, various cetyl groups, and a phenyl group. The term "various" means various isomers including n-, sec-, tert-, and iso-.

Further, a cyclic compound polymerized as an oligomer may be used as a ligand.

Further, monovalent anion ligands such as chlorine and bromine, divalent anion chelate ligands, hydrocarbons, alkoxides, arylamides, aryloxides, amides, phosphides, arylphosphides, or the like may be used other than π electron unsaturated compounds.

Examples of metallocene catalysts containing tetravalent transition metals and ligands include cyclopentadienyltitanium tris(dimethylamide), methylcyclopentadienyltitanium tris(dimethylamide), bis(cyclopentadienyl)titanium dichloride, and dimethylsilyltetramethylcyclopentadienyl-t-butylamidozirconium dichloride.

A metallocene catalyst combined with a specific co-catalyst (promoter) exert its action as a catalyst when polymerizing various olefins. Specific examples of the co-catalyst include methylaluminoxane (MAO) and boron compounds. The ratio of the co-catalyst to be used with respect to the metallocene catalyst is preferably 10 to 1,000,000 mol times, more preferably 50 to 5,000 mol times.

Further, the polyethylene resin is preferably linear low density polyethylene. The linear low density polyethylene is more preferably linear low density polyethylene obtained by copolymerizing ethylene (for example, 75 mass% or more, preferably 90 mass% or more with respect to the total monomer amount) and a small amount of α-olefin, as required. Specifically, examples of the α-olefin include propylene, 1-butene, 1-pentene, 4-methyl-1-pentene, 1-hexene, 1-heptene, and 1-octene. Among these, α-olefins having 4 to 10 carbon atoms are preferable.

The density of the polyethylene resin, for example, the aforementioned linear low density polyethylene is preferably 0.870 to 0.925 g/cm$^3$, more preferably 0.890 to 0.925 g/cm$^3$, still more preferably 0.910 to 0.925 g/cm$^3$, in view of flexibility. A plurality of polyethylene resins can be used as the polyethylene resin, and a polyethylene resin having a density other than the aforementioned range may be added.

Examples of ethylene-vinyl acetate copolymers used as polyolefin resins include ethylene-vinyl acetate copolymers containing 50 mass% or more of ethylene.

Further, examples of polypropylene resins include homopolypropylene and propylene-α-olefin copolymers containing 50 mass% or more of propylene. These may be used individually by one type, or two or more of them may be used in combination. Specifically, examples of α-olefins constituting the propylene-α-olefin copolymer can include ethylene, 1-butene, 1-pentene, 4-methyl-1-pentene, 1-hexene, 1-heptene, and 1-octene. Among these, α-olefins having 6 to 12 carbon atoms are preferable.

Examples of the polybutene resins can include homopolymers of butene-1 and copolymers with ethylene or propylene.

[Mass ratio between elastomer (A) and polyolefin resin (B)]

The mass ratio between the elastomer (A) and the polyolefin resin (B) is preferably 90:10 to 20:80. Within this range, a foam sheet that achieves the effect of the present invention can be easily manufactured. From the viewpoint of obtaining a foam sheet that achieves a higher effect, the mass ratio between the elastomer (A) and the polyolefin resin (B) more preferably falls within a range of 80:20 to 25:75, still more preferably falls within a range of 75:25 to 30:70, yet still more preferably falls within a range of 70:30 to 50:50.

The foam sheet of the present invention may contain a resin other than the elastomer (A) and the polyolefin resin (B) within a range that does not inhibit the effect of the present invention. However, from the viewpoint of achieving a foam sheet that has a stress relaxation ratio of 23% or more and a 25% compressive strength of 1,000 kPa or less, the total of the rate of the elastomer (A) and the polyolefin resin (B) in the resin component of the foam sheet of the present invention is preferably high. Specifically, the total of the rate of the elastomer (A) and the polyolefin resin (B) in the resin component of the foam sheet of the present invention is preferably 80 to 100 mass%, more preferably 90 to 100 mass%, still more preferably 95 to 100 mass%, yet still more preferably 99 to 100 mass%.

[Additive]

The foam sheet of the present invention is preferably obtained by foaming the aforementioned resin and a foamable composition containing a foaming agent. The foaming agent is preferably a thermally decomposable foaming agent.

As the thermally decomposable foaming agent, organic foaming agents and inorganic foaming agents can be used. Examples of the organic foaming agents include azo compounds such as azodicarbonamide, azodicarbon acid metal salt (such as barium azodicarboxylate), and azobisisobutyronitrile, nitroso compounds such as N,N'-dinitrosopentamethylenetetramine, hydrazine derivatives such as hydrazodicarbonamide, 4,4'-oxybis (benzenesulfonylhydrazide), and toluenesulfonylhydrazide, and semicarbazide compounds such as toluenesulfonylsemicarbazide.

Examples of the inorganic foaming agents include ammonium carbonate, sodium carbonate, ammonium bicarbonate, sodium bicarbonate, ammonium nitrite, sodium borohydride, and anhydrous monosodium citrate.

Among these, azo compounds are preferable, and azodicarbonamide is more preferable, in view of economic efficiency and safety, for obtaining fine cells.

The thermally decomposable foaming agents may be used individually by one type, or two or more of them may be used in combination.

The amount of the foaming agent to be mixed in the foamable composition is preferably 1 to 20 parts by mass, more preferably 1.5 to 15 parts by mass, further preferably 3 to 10 parts by mass, with respect to 100 parts by mass of the resin. When the amount of the foaming agent to be mixed is 1 part by mass or more, the foamable sheet is appropriately foamed, and appropriate flexibility and appropriate impact absorption can be imparted to the foam sheet. Further, when the amount of the foaming agent to be mixed is 20 parts by mass or less, the foam sheet is prevented from foaming more than necessary, and the mechanical strength of the foam sheet and the like can be enhanced.

The foamable composition may contain a decomposition temperature adjuster. The decomposition temperature adjuster is contained to have an adjusting function such as lowering the decomposition temperature of the thermally decomposable foaming agent and accelerating the degradation rate, and specific compounds include zinc oxide, zinc stearate, and urea. The decomposition temperature adjuster is contained, for example, in an amount of 0.01 to 5 parts by mass with respect to 100 parts by mass of the resin, for adjusting the surface conditions of the foam sheet.

The foamable composition may contain an antioxidant. Examples of the antioxidant include phenolic antioxidants such as 2,6-di-t-butyl-p-cresol, sulfur antioxidants, phosphorus antioxidants, and amine antioxidants. The antioxidant is contained, for example, in an amount of 0.01 to 5 parts by mass with respect to 100 parts by mass of the resin.

The foamable composition may contain commonly used additives for foams such as heat stabilizers, colorants, flame retardants, antistatic agents, fillers other than these examples.

The foam sheet mainly contains the elastomer (A) and the polyolefin resin (B), and the total content of the component (A) and the component (B) is, for example, 70 mass% or more, preferably 80 mass% or more, more preferably 90 mass% or more, based on the total amount of the foam sheet.

[Method for producing foam sheet]

The foam sheet of the present invention is not particularly limited but can be produced by heating a foamable sheet composed of a foamable composition containing at least a resin and a thermally decomposable foaming agent and foaming the thermally decomposable foaming agent. Further, the foamable sheet is preferably crosslinked, and the crosslinked foamable sheet is heated to be foamed.

More specifically, the method for producing a foam sheet preferably includes steps (1) to (3) below.

Step (1): a step of forming a foamable sheet consisting of a foamable composition containing at least a resin and a thermally decomposable foaming agent;
Step (2): a step of crosslinking the foamable sheet by irradiating the foamable sheet with ionizing radiation; and
Step (3): a step of obtaining a foam sheet by heating the crosslinked foamable sheet and foaming the thermally decomposable foaming agent.

In step (1), the method for forming a foamable sheet is not specifically limited, but a resin and an additive may be supplied to an extruder and melt-kneaded, so that a foamable composition is extruded from the extruder into a sheet, for example. Further, the foamable sheet may be formed by pressing the foamable composition. The forming temperature of the foamable sheet (that is, the temperature at the time of extrusion or the temperature at the time of pressing) is preferably 50 to 250°C, more preferably 80 to 180°C.

As the method for crosslinking the foamable composition in step (2), a method of irradiating the foamable sheet with ionizing radiation such as electron beams, $\alpha$ rays, $\beta$ rays, and $\gamma$ rays is used. The irradiation dose of the ionizing radiation may be adjusted so that the crosslinking degree of the foam sheet to be obtained is within the aforementioned desired range but is preferably 1 to 12 Mrad, more preferably 1.5 to 10 Mrad.

In step (3), the heating temperature at which the foamable composition is heated to foam the thermally decomposable foaming agent may be the foaming temperature of the thermally decomposable foaming agent or more but is preferably 200 to 300°C, more preferably 220 to 280°C. In step (3), the foamable composition is foamed so that cells are formed to form a foam.

Moreover, in this production method, the foam sheet may be thinned by a method such as rolling and stretching, and the oblateness of a cell may be adjusted by rolling and stretching.

However, this production method is not limited to the above, and a foam sheet may be obtained by a method other than the above. For example, crosslinking may be performed by mixing an organic peroxide in the foamable composition in advance and heating the foamable sheet to decompose the organic peroxide, instead of irradiation with ionizing radiation.

Further, if crosslinking is not necessary, step (2) may be omitted. In such a case, an uncrosslinked foamable sheet may be heated to be foamed in step (3).

[Pressure-sensitive adhesive tape]

The pressure-sensitive adhesive tape of the present invention includes a foam sheet of the present invention and a pressure-sensitive adhesive material provided on at least one surface of the foam sheet. The pressure-sensitive adhesive tape can adhere to another member such as a support member via the pressure-sensitive adhesive material. The pressure-sensitive adhesive tape may be foam sheet provided with the pressure-sensitive adhesive material on each of both sides or may be provided with the pressure-sensitive adhesive material on one side.

Further, the pressure-sensitive adhesive material may include at least a pressure-sensitive adhesive layer and may be a pressure-sensitive adhesive layer alone laminated on the surface of the foam sheet or a double-sided pressure-sensitive adhesive sheet attached to the surface of the foam sheet. However, it is preferably a pressure-sensitive adhesive layer alone. The double-sided pressure-sensitive adhesive sheet includes a base material and a pressure-sensitive adhesive layer provided on each of both sides of a base material. The double-sided pressure-sensitive adhesive sheet is used for attaching one pressure-sensitive adhesive layer to the foam sheet and attaching the other pressure-sensitive adhesive layer to another member.

The pressure-sensitive adhesive constituting the pressure-sensitive adhesive layer is not particularly limited and acrylic pressure-sensitive adhesives, urethane pressure-sensitive adhesives, rubber pressure-sensitive adhesives, silicone pressure-sensitive adhesives, and the like can be used, for example. A release sheet such as a mold release paper may be bonded further on the pressure-sensitive adhesive material.

The thickness of the pressure-sensitive adhesive layer is preferably 5 to 200 $\mu$m, more preferably 7 to 150 $\mu$m, further preferably 10 to 100 $\mu$m.

[Foam sheet roll]

The foam sheet of the present invention can be made into a roll. The roll makes it easy to store and is convenient for transportation. When used, it can be unwound from the roll for use. As described above, the stress relaxation ratio of the foam sheet of the present invention is 23% or more. Therefore, when a foam sheet is wound into a roll, occurrence of troubles such as wrinkles can be prevented. Moreover, the 25% compressive strength of the foam sheet of the present invention is equal to or lower than a predetermined value as described above. Therefore, when the foam sheet is wound into a roll, occurrence of defects such as lifting can be prevented.

[Application of foam sheet]

The application of the foam sheet of the present invention is not particularly limited but is preferably used in the application of electronic devices. Examples of the electronic devices include mobile phones such as smartphones, and mobile electronic devices such as game devices, electronic notebooks, tablet terminals, and notebook personal computers. The foam sheet can be used as a cushioning inside an electronic device and is preferably used as a cushioning material for display devices. In addition, it is preferably used as a sealing material that fills, for example, a gap between components in an electronic device. Since the foam sheet of the present invention can prevent occurrence of problems such as lifting on a fixed member due to variation in the tolerance of a curved surface, it is preferably used in an electronic device that has a curved surface structure. Moreover, in an electronic device having a curved surface structure, the foam sheet of the present invention is also preferably disposed along a member that has the curved surface structure.

The foam sheet of the present invention may be used in any shape and may be used, for example, in thin width. Specifically, it may be frame-shaped such as a long rectangular shape or a square shape, L-shaped, U-shaped, or the like. The width thereof is, for example, 5 mm or less, preferably 3 mm or less, more preferably 1 mm or less. In addition, it is, for example, 0.1 mm or more.

The foam sheet used as a cushioning material for display devices may be disposed, for example, on the back side of a display panel provided in various electronic devices, and may be used to absorb the impact acting on the display panel. In this case, the foam sheet may be disposed on a support member disposed on the back side of the display panel. The support member constitutes, for example, a part of the housing of various electronic devices.

The foam sheet used in electronic devices may be provided with a pressure-sensitive adhesive material, as described above, and may be pasted to a display panel, a support member, or the like with the pressure-sensitive adhesive material. Since the foam sheet of the present invention can prevent occurrence of problems such as lifting on a fixed member due to variation in the tolerance of a curved surface, it is preferably used in a part that has a curved surface structure. Specifically, the foam sheet of the present invention may be pasted to a support member or a display panel that has a curved surface structure by a pressure-sensitive adhesive material. This makes it possible to prevent occurrence of problems such as lifting on another member pasted to a member even if a support member or a member such as a display panel has variation in the tolerance of a curved surface.

Examples

The present invention will be described in more detail with reference to Examples, but the present invention is not limited to these Examples in any way.

[Measurement method]

The measurement method and the evaluation method of the respective physical properties are as follows.

<Thickness>

The measurement was performed with a dial gauge.

<Density and expansion ratio>

The specific volumes (unit: cc/g) of the foam sheet before and after foaming were measured. Then, the expansion ratio was calculated based on specific volume after foaming/specific volume before foaming. In addition, the density was calculated from the measured specific volume.

<Average cell size and oblateness of cell>

The foam sheet was cut in the thickness direction (ZD) along the MD and the TD, and a 200x magnified photograph was taken using a digital microscope (KEYENCE CORPORATION, product name "VHX-900"). In the enlarged taken photograph, the cell size of the MD, the cell size of the TD, and the cell size of the ZD were measured for all the cells existing in a cross section having a length of 2 mm in MD and TD, and its operation was repeated five times. Then, the average values of the respective cell sizes of the MD, the TD, and the ZD of all cells were considered as the average cell sizes of the MD, the TD, and the ZD. Then, an average of average cell sizes of MD and TD was considered as an average cell size. An oblateness of the MD of a cell was calculated by dividing the average cell size of the MD by the average cell size of the ZD. Moreover, an oblateness of the TD of a cell was calculated by dividing the average cell size of the TD by the average cell size of the ZD.

< Local maximum value of loss tangent (tan$\delta$) and temperature indicating local maximum value of loss tangent (tan$\delta$)>

The local maximum value of tan$\delta$ and the temperature indicating the local maximum value of tan$\delta$ are determined under the following measurement conditions using a tensile storage modulus measuring device, product name "DVA-200/L2", available from IT Instrumentation & Control Co., Ltd. Note that, the temperature indicating the local maximum value of tan$\delta$ corresponds to a glass transition temperature (Tg).

(Measurement conditions)

```
Gauge length: 2.5 cm
Sample width: 0.5 cm
Sample thickness: Thickness of the foam sheet
Deformation mode: Tensile
Static/dynamic stress ratio: 1.5
Set distortion: 1.0%
Set heating rate: 10°C/min
Measurement frequency: 10 Hz
Temperature range: -150°C to 100°C
```

<25% Compressive strength>

The measurement was performed at a measurement temperature of 23°C by the measurement method according to JIS K6767.

<Interlaminar strength>

Fig. 1 shows a schematic view of a testing apparatus for evaluating an interlaminar strength. After Primer (available from CEMEDINE CO., LTD. "PPX Primer") was coated on a 25 mm square area of a foam sheet 11, an adhesive 12 (available from CEMEDINE CO., LTD., "PPX") was added dropwise in the center of the coated portion so as to be coated in a diameter of 5 mm. Immediately after that, an aluminum jig 13 with 25 mm square was placed on the portion to which the adhesive was added dropwise, and the foam sheet and the jig 13 were subjected to compression bonding. Then, the foam sheet was cut along the size of the jig 13. Primer was coated on the surface of the cut foam sheet to which the jig 13 was not attached, and the adhesive 12 was added dropwise to the center of the coated portion so as to be coated in a diameter of 5 mm. Immediately after that, an aluminum jig 14 with 10 mm square was placed on the portion to which the adhesive was added dropwise, and the foam sheet and the jig 14 were subjected to compression bonding. After the adhesive that had protruded around the periphery of the jig 14 was wiped off, a cutting 15 was made in the foam sheet along the size of the jig 14. This was allowed to stand at room temperature for 30 minutes to cure the adhesive, and a sample for measuring the interlaminar strength was obtained.

Next, a 1 kN load cell was placed in a tester (available from A&D Company, Limited "TENSILON universal material testing instrument") equipped with a thermostat bath so that tests were performed in the thermostat bath. Then, the sample for measuring the interlaminar strength was attached to the tester so that the sheet surface of the foam sheet was perpendicular to the tensile direction. After the temperature of the thermostat bath was set to 23°C, it was allowed to stand until the temperature of the sample for measuring the interlaminar strength reached 23°C. Then, one side of the jig was pulled vertically upward at a rate of 100 mm/min, and only an area of 1 cm square of the foam sheet was peeled off. The maximum load at this time was measured and was used as the first measurement result. The same operation was repeated three times, and its average value was considered as the interlaminar strength.

<Stress relaxation ratio>

The foam sheet was cut into a planar square shape of 10 mm × 10 mm and was laminated so as to have a thickness of 4 mm to prepare a test piece. The test piece was compressed to a stress A of 1.2 MPa under the condition of a rate of 5 mm/min using a tensile tester (Autograph AGS-X, available from SHIMADZU CORPORATION) and was allowed to stand in that state for 1 minute. The lowest stress value B in the stationary state was measured, and the stress relaxation ratio was calculated using the following formula. The measurement was performed in an environment of 23°C and 50% RH.

$$\text{Stress relaxation ratio (\%)} = (A\text{-}B)/A \times 100$$

<Closed cell ratio>

From the foam sheet, a flat square test piece with a side of 5 cm was cut out. The thickness of the test piece was measured to calculate the appearance volume V1 of the test piece, and the mass W1 of the test piece was measured. Then, the volume V2 occupied by the cells was calculated based on the following formula. The density of the test piece was referred to as $\rho$(g/cm$^3$).

$$\text{Volume V2 occupied by cells} = V1 \text{ - } W1/\rho$$

Subsequently, the test piece was submerged into distilled water at 23°C to a depth of 100 mm from the water surface, to apply a pressure of 15 kPa to the test piece for 3 minutes. Thereafter, the test piece was taken out of water, and water adhering to the surface of the test piece was removed, the mass W2 of the test piece was measured, and the closed cell ratio F 1 was calculated based on the following formula.

$$\text{Closed cell ratio F1 (\%)} = 100\text{-}100 \times (W2\text{-}W1)/V2$$

<Gel fraction>

A test piece of about 100 mg was taken from the foam sheet, and a mass C (mg) of the test piece was precisely weighed. Next, the test piece was immersed in 30 cm$^3$ of xylene at 120°C and was allowed to stand for 24 hours, and then filtered through a 200-mesh wire net to collect the insoluble matter on the wire net. The insoluble matter was then dried under vacuum, and a mass D (mg) of the insoluble matter was precisely weighed. From the obtained value, the gel fraction (mass%) was calculated using the following equation.

$$\text{Gel fraction (mass\%)} = 100 \times (D/C)$$

<Evaluation of permanent strain>

The foam sheet was cut into a plane square shape having a size of 10 mm × 10 mm and was laminated until the thickness reached about 4 mm, to produce a test piece. Then, the thickness of the test piece (E) was measured. The test piece was compressed to a stress of 1.2 MPa under the condition of a rate of 5 mm/min using a tensile tester (available from SHIMADZU CORPORATION, Autograph AGS-X), and was allowed to stand for a minute in this state. Then, the compression was released to measure the thickness (F) of the test piece after the compression. Then, the permanent strain ratio was calculated based on the following equation. Then, the evaluation was performed as follows. Note that, the permanent strain ratio was measured in an environment of 23°C and 50% RH.

$$\text{Permanent strain ratio (\%)} = (1\text{-}F/E) \times 100$$

(Evaluation criteria)

Good: The permanent strain ratio is 16% or more.
Fair: The permanent strain ratio is 15%.
Poor: The permanent strain ratio is less than 15%.

The materials used in Examples and Comparative Examples were as follows.

- Elastomer resin (a): EP1001 (4-methyl-1 pentene/propylene copolymer, available from Mitsui Chemicals, Inc.)
- Elastomer resin (b): EP1013 (4-methyl-1 pentene/propylene copolymer, available from Mitsui Chemicals, Inc.)
- Elastomer resin (c): S.O.E. (registered trademark) S1605, (hydrogenated thermoplastic styrene elastomer (SEBS) available from Asahi Kasei Corp.)
- Elastomer resin (d): HYBRAR (registered trademark) 5127, (thermoplastic styrene elastomer (SIS) available from Kuraray Co., Ltd.)

- Polyolefin resin (a): KERNEL (R) KF283 (ethylene/$\alpha$-olefin copolymer polymerized with a metallocene catalyst (LLDPE), available from Japan Polyethylene Corporation)
- Thermally decomposable foaming agent: azodicarbonamide
- Decomposition temperature adjuster: zinc oxide, product name "OW-212F", available from Sakai Chemical Industry Co., Ltd.
- Phenolic antioxidant: 2,6-di-t-butyl-p-cresol

[Production method of foam sheet]

The foam sheets of the Examples 1 to 12 and Comparative Examples 1 and 2 were produced as described below.

<Example 1>

50 parts by mass of the elastomer resin (a), 50 parts by mass of the polyolefin resin (a), 3 parts by mass of the thermally decomposable foaming agent, 1 part by mass of the decomposition temperature adjuster, and 0.5 parts by mass of the phenolic antioxidant were prepared as raw materials. These materials were melt-kneaded and then pressed, to obtain a foamable resin sheet with a thickness of 0.15 mm. Both sides of the foamable resin sheet obtained were irradiated with 6.5 Mrad of an electron beam at an acceleration voltage of 500 keV, to crosslink the foamable resin sheet. Next, the crosslinked foamable resin sheet was heated to 250°C to be foamed while stretched in MD and TD so as to achieve the oblatenesses described in Table 1, to obtain a foam sheet having a density of 0.51 g/cm$^3$ and a thickness of 0.10 mm.

<Example 2>

A foam sheet was obtained in the same manner as in Example 1 except that the amount of the elastomer resin (a) to be mixed was changed from 50 parts by mass to 30 parts by mass, the amount of the polyolefin resin (a) to be mixed was changed from 50 parts by mass to 70 parts by mass, and stretching was performed in MD and TD so as to achieve the oblatenesses described in Table 1.

<Example 3>

The amount of the elastomer resin (a) to be mixed was changed from 50 parts by mass to 30 parts by mass, the amount of the polyolefin resin (a) to be mixed was changed from 50 parts by mass to 70 parts by mass, the amount of the thermally decomposable foaming agent to be mixed was changed from 3 parts by mass to 4.2 parts by mass. The radiation dose of the electron beam was changed from 6.5 Mrad to 6 Mrad, and the foamable resin sheet was stretched in MD and TD so as to achieve the oblatenesses described in Table 1. Aside from the above, a foam sheet was obtained in the same manner as in Example 1.

<Example 4>

A foam sheet was obtained in the same manner as in Example 1 except that the elastomer resin (a) was changed to the elastomer resin (b), the amount of the thermally decomposable foaming agent to be mixed was changed from 3 parts by mass to 5.5 parts by mass, the radiation dose of the electron beam was changed from 6.5 Mrad to 6 Mrad, and stretching was performed in MD and TD so as to achieve the oblatenesses described in Table 1.

<Example 5>

A foam sheet was obtained in the same manner as in Example 1 except that the elastomer resin (a) was changed to the elastomer resin (b), the amount of the thermally decomposable foaming agent to be mixed was changed from 3 parts by mass to 4.5 parts by mass, the radiation dose of the electron beam was changed from 6.5 Mrad to 8 Mrad, and stretching was performed in MD and TD so as to achieve the oblatenesses described in Table 1.

<Example 6>

A foam sheet was obtained in the same manner as in Example 1 except that the elastomer resin (a) was changed to the elastomer resin (c), the amount of the thermally decomposable foaming agent to be mixed was changed from 3 parts by mass to 5 parts by mass, the radiation dose of the electron beam was changed from 6.5 Mrad to 6 Mrad, and stretching was performed in MD and TD so as to achieve the oblatenesses described in Table 1.

<Example 7>

A foam sheet was obtained in the same manner as in Example 6 except that the amount of the elastomer resin (c) to be mixed was changed from 50 parts by mass to 60 parts by mass, the amount of the polyolefin resin (a) to be mixed was changed from 50 parts by mass to 40 parts by mass, and the radiation dose of the electron beam was changed from 6 Mrad to 8 Mrad.

<Example 8>

A foam sheet was obtained in the same manner as in Example 6 except that the amount of the elastomer resin (c) to be mixed was changed from 50 parts by mass to 90 parts by mass, the amount of the polyolefin resin (a) to be mixed was changed from 50 parts by mass to 10 parts by mass, the amount of the thermally decomposable foaming agent to be mixed was changed from 5 parts by mass to 4 parts by mass, and the acceleration voltage was changed from 500 keV to 1,000 keV.

<Example 9>

A foam sheet was obtained in the same manner as in Example 1 except that the elastomer resin (a) was changed to the elastomer resin (d), the amount of the thermally decomposable foaming agent to be mixed was changed from 3 parts by mass to 5 parts by mass, the radiation dose of the electron beam was changed from 6.5 Mrad to 6 Mrad, and stretching was performed in MD and TD so as to achieve the oblatenesses described in Table 1.

<Example 10>

The amount of the elastomer resin (a) to be mixed was changed from 50 parts by mass to 25 parts by mass, the amount of the polyolefin resin (a) to be mixed was changed from 50 parts by mass to 75 parts by mass, and the amount of the thermally decomposable foaming agent to be mixed was changed from 3 parts by mass to 5 parts by mass. The radiation dose of the electron beam was changed from 6.5 Mrad to 7 Mrad, and the foamable resin sheet was stretched in MD and TD so as to achieve the oblatenesses described in Table 1. Aside from the above, a foam sheet was obtained in the same manner as in Example 1.

<Example 11>

The elastomer resin (a) was changed to the elastomer resin (b), its amount to be mixed was changed from 50 parts by mass to 40 parts by mass, the amount of the polyolefin resin (a) to be mixed was changed from 50 parts by mass to 60 parts by mass, and the amount of the thermally decomposable foaming agent to be mixed was changed from 3 parts by mass to 4.5 parts by mass. Moreover, the radiation dose of the electron beam was changed from 6.5 Mrad to 7 Mrad, and stretching was performed in MD and TD so as to achieve the oblatenesses described in Table 1. Aside from the above, a foam sheet was obtained in the same manner as in Example 1.

<Example 12>

The elastomer resin (a) was changed to the elastomer resin (c), its amount to be mixed was changed from 50 parts by mass to 40 parts by mass, the amount of the polyolefin resin (a) to be mixed was changed from 50 parts by mass to 60 parts by mass, and the amount of the thermally decomposable foaming agent to be mixed was changed from 3 parts by mass to 5.4 parts by mass. The radiation dose of the electron beam was changed from 6.5 Mrad to 7 Mrad, and stretching was performed in MD and TD so as to achieve the oblatenesses described in Table. Aside from the above, a foam sheet was obtained in the same manner as in Example 1.

<Comparative Example 1>

A foam sheet was obtained in the same manner as in Example 1 except that the amount of the elastomer resin (a) to be mixed was changed from 50 parts by mass to 0 parts by mass, the amount of the polyolefin resin (a) to be mixed was changed from 50 parts by mass to 100 parts by mass, the radiation dose of the electron beam was changed from 6.5 Mrad to 6 Mrad, and stretching was performed in MD and TD so as to achieve the oblatenesses described in Table 1.

<Comparative Example 2>

A foam sheet was obtained in the same manner as in Example 9 except that the amount of the elastomer resin (d) to be mixed was changed from 50 parts by mass to 10 parts by mass, the amount of the polyolefin resin (a) to be mixed was changed from 50 parts by mass to 90 parts by mass, the radiation dose of the electron beam was changed from 6.5 Mrad to 7 Mrad, and stretching was performed in MD and TD so as to achieve the oblatenesses described in Table 1.

The evaluation results of Examples 1 to 12 and Comparative Examples 1 and 2 are described in Table 1.

Table 1

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|---|---|
| Formulation (part(s) by mass) | Elastomer resin (A) | (a) EP1001 | 50 | 30 | 30 | 30 | - | - | - | - | - | 25 | - | - | - | - |
| | | (b) EP1013 | - | - | - | - | 50 | - | - | - | - | - | 40 | - | - | - |
| | | (c) S1605 | - | - | - | | - | 50 | 60 | 90 | - | - | - | 40 | - | - |
| | | (d) HYBRAR 5127 | - | - | - | - | - | - | - | - | 50 | - | - | - | - | 10 |
| | Polyolefin resin (B) | (a) KERNEL KF283 | 50 | 70 | 70 | 70 | 50 | 50 | 40 | 10 | 50 | 75 | 60 | 60 | 100 | 90 |
| | Thermally decomposable foaming agent | Azodicarbona mide | 3 | 3 | 4.2 | 5.5 | 4.5 | 5 | 5 | 4 | 5 | 5 | 4.5 | 5.4 | 3 | 3 |
| | Antioxidant | 2,6-Di-t-butyl-p-cresol | 0.5 | 0.5 | 0.5 | 0.5 | 0.5 | 0.5 | 0.5 | 0.5 | 0.5 | 0.5 | 0.5 | 0.5 | 0.5 | 0.5 |
| | Decomposition temperature adjuster | OW-212F | 1 | 1 | 1 | 1 | 1 | 1 | 1 | 1 | 1 | 1 | 1 | 1 | 1 | 1 |
| Manufacturing conditions | Thickness of foamable resin sheet (mm) | | 0.15 | 0.5 | 0.65 | 0.5 | 0.4 | 0.35 | 0.35 | 0.95 | 0.4 | 0.5 | 0.65 | 0.5 | 0.3 | 0.2 |
| | Acceleration voltage (keV) | | 500 | 500 | 500 | 500 | 500 | 500 | 500 | 1000 | 500 | 500 | 500 | 500 | 500 | 500 |
| | Radiation dose (Mrad) | | 6.5 | 6.5 | 6 | 6 | 8 | 6 | 8 | 6 | 6 | 7 | 7 | 7 | 6 | 7 |

(continued)

| | | Exam-ple 1 | Exam-ple 2 | Exam-ple 3 | Exam-ple 4 | Ex-ample 5 | Exam-ple 6 | Exam-ple 7 | Exam-ple 8 | Exam-ple 9 | Exam-ple 10 | Exam-ple 11 | Exam-ple 12 | Compara-tive Example 1 | Compar-ative Example 2 |
|---|---|---|---|---|---|---|---|---|---|---|---|---|---|---|---|
| Physical properties of foam sheet | Thickness (mm) | 0.1 | 0.3 | 0.5 | 0.5 | 0.3 | 0.3 | 0.3 | 0.8 | 0.3 | 0.5 | 0.5 | 0.4 | 0.15 | 0.15 |
| | Density (g/cm$^3$) | 0.51 | 0.23 | 0.15 | 0.10 | 0.15 | 0.15 | 0.15 | 0.15 | 0.15 | 0.13 | 0.14 | 0.11 | 0.52 | 0.52 |
| | Expansion ratio (folds) | 1.8 | 4 | 6 | 9 | 6 | 6 | 6 | 6 | 6 | 8 | 7 | 9 | 1.8 | 1.8 |
| | Average cell size ($\mu$m) | 42 | 85 | 110 | 140 | 108 | 100 | 102 | 131 | 115 | 121 | 114 | 138 | 52 | 42 |
| | Oblateness of MD of cell (MD/ZD) | 1.8 | 2.76 | 2.52 | 2.28 | 2.64 | 2.28 | 2.28 | 2.28 | 2.4 | 2.2 | 2.00 | 2.26 | 2.4 | 1.8 |
| | Oblateness of TD of cell (TD/ZD) | 2.25 | 5.29 | 4.41 | 3.61 | 4.84 | 3.61 | 3.61 | 3.61 | 4 | 3.46 | 3.45 | 3.54 | 4 | 2.25 |

| | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|---|
| | Larger oblateness of MD and TD of cell | 2.25 | 5.29 | 4.41 | 3.61 | 4.84 | 3.61 | 3.61 | 3.61 | 4.00 | 3.46 | 3.45 | 3.54 | 4.00 | 2.25 | |
| | Local maximum value of $\tan\delta$ | 0.85 | 0.45 | 0.44 | 0.44 | 0.625 | 0.65 | 0.81 | 1.38 | 0.58 | 0.4 | 0.61 | 0.6 | 0.189 | 0.2 | |
| | Temperature indicating local maximum value of $\tan\delta$ (Tg) (°C)[*1] | 29 | 28 | 28 | 28 | 42 | 17 | 17 | 18 | 22 | 28 | 40 | 19 | -120 | 22 | |
| | 25% compressive strength (kPa) | 621 | 89 | 71 | 56 | 69 | 72 | 79 | 81 | 68 | 62 | 73 | 57 | 892 | 798 | |
| | Interlaminar strength (MPa) | 3.1 | 2.1 | 1.9 | 1.1 | 1 | 1.2 | 1.1 | 1.9 | 1.2 | 1.5 | 1.2 | 1.0 | 4.4 | 4.7 | |
| | Stress relaxation ratio (%) | 45 | 32 | 31 | 36 | 34 | 36 | 37 | 42 | 35 | 25.7 | 27.5 | 29.1 | 16 | 21 | |
| | Closed cell ratio (%) | 99 | 98 | 100 | 99 | 99 | 98 | 99 | 98 | 99 | 97 | 96 | 98 | 100 | 100 | |
| | Gel fraction (%) | 51 | 53 | 42 | 54 | 61 | 53 | 62 | 40 | 42 | 45 | 47 | 48 | 33 | 45 | |
| Evaluation | Permanent strain | Good | Good | Good | Good | Good | Good | Good | Good | Good | Fair | Fair | Fair | Poor | Poor |

* 1 In Examples 1 to 12 and Comparative Example 2, a local maximum value of $\tan\delta$ was shown even at -120°C.

From the evaluation results of the foam sheets of Examples 1 to 12 and Comparative Examples 1 and 2, it was found that when the stress relaxation ratio is 23% or more and the 25% compressive strength is 1,000 kPa or less, the permanent strain of the foam sheet becomes high. Therefore, it is found that use of the foam sheets of Examples 1 to 12 for pressure-sensitive adhesive tapes can prevent occurrence of problems such as lifting on a fixed member due to variation in the tolerance of a curved surface when the pressure-sensitive adhesive tape is pasted on the curved surface to fix the member.

Reference Signs List

1 Screen
2 Foam tape
3 Housing
11 Foam sheet
12 Adhesive
13 Jig
14 Jig
15 Cutting

**Claims**

1. A foam sheet having a stress relaxation ratio of 23% or more and a 25% compressive strength of 1,000 kPa or less.

2. The foam sheet according to claim 1, having an interlaminar strength of 0.6 MPa or more.

3. The foam sheet according to claim 1 or 2, having a closed cell ratio of 80% or more.

4. The foam sheet according to any one of claims 1 to 3, having a gel fraction of 30 to 80%.

5. The foam sheet according to any one of claims 1 to 4, wherein a larger oblateness of an oblateness of MD and an oblateness of TD of a cell is 2 or more.

6. The foam sheet according to any one of claims 1 to 5, having a density of 0.05 to 0.6 $g/cm^3$.

7. The foam sheet according to any one of claims 1 to 6, having a thickness of 0.03 to 2 mm.

8. The foam sheet according to any one of claims 1 to 7, wherein a temperature indicating a local maximum value of a loss tangent (tanδ) of a dynamic viscoelasticity falls at least one within a range of at least 15 to 50°C.

9. The foam sheet according to any one of claims 1 to 8, wherein a local maximum value of a loss tangent (tanδ) of a dynamic viscoelasticity is 0.2 or more.

10. A pressure-sensitive adhesive tape comprising the foam sheet according to any one of claims 1 to 9 and a pressure-sensitive adhesive material provided on at least one surface of the foam sheet.

Fig. 1

## INTERNATIONAL SEARCH REPORT

International application No.

**PCT/JP2023/010863**

### A. CLASSIFICATION OF SUBJECT MATTER

***C08J 9/04***(2006.01)i; ***C09J 7/26***(2018.01)i
FI:   C08J9/04 CEZ; C09J7/26

According to International Patent Classification (IPC) or to both national classification and IPC

### B. FIELDS SEARCHED

Minimum documentation searched (classification system followed by classification symbols)

C08J9/00-9/42; C09J7-00-7/50; B32B1/00-43/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 112574571 A (INSTITUTE OF NUCLEAR PHYSICS & CHEMISTRY CHINA ACADEMY OF ENGINEERING AND PHYSICS) 30 March 2021 (2021-03-30)<br>entire document, in particular, claims, examples | 1, 4, 6, 7 |
| X | WO 2014/098122 A1 (NITTO DENKO CORP.) 26 June 2014 (2014-06-26)<br>entire document, in particular, claims, paragraphs [0021]-[0031], [0117]-[0147] | 1, 6, 7, 10 |
| A | WO 2017/030141 A1 (OBAN KK) 23 February 2017 (2017-02-23)<br>entire document, in particular, claims, paragraphs [0017]-[0022], [0094]-[0104], [0129]-[0150], fig. 5-8 | 1, 6-9 |
| A | JP 2020-200410 A (SEKISUI CHEMICAL CO., LTD.) 17 December 2020 (2020-12-17)<br>entire text | 1-10 |
| A | JP 6974655 B1 (SEKISUI CHEMICAL CO., LTD.) 01 December 2021 (2021-12-01)<br>entire text | 1-10 |
| A | JP 2002-275298 A (JSP CORP.) 25 September 2002 (2002-09-25)<br>entire document | 1-10 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="3" align="center">**INTERNATIONAL SEARCH REPORT**</td><td>International application No.<br>**PCT/JP2023/010863**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | WO 2021/106914 A1 (NITTO DENKO CORP.) 03 June 2021 (2021-06-03)<br>entire text | 1-10 |

Form PCT/ISA/210 (second sheet) (January 2015)

INTERNATIONAL SEARCH REPORT
Information on patent family members

International application No.

**PCT/JP2023/010863**

| Patent document cited in search report | | | Publication date (day/month/year) | Patent family member(s) | | | Publication date (day/month/year) |
|---|---|---|---|---|---|---|---|
| CN | 112574571 | A | 30 March 2021 | (Family: none) | | | |
| WO | 2014/098122 | A1 | 26 June 2014 | US | 2015/0099112 | A1 | |
| | | | | entire document, in particular, claims, paragraphs [0031]-[0045], [0135]-[0170] | | | |
| | | | | WO | 2014/098123 | A1 | |
| | | | | WO | 2014/098124 | A1 | |
| | | | | WO | 2014/098125 | A1 | |
| | | | | WO | 2014/098252 | A1 | |
| | | | | WO | 2014/098255 | A1 | |
| | | | | TW | 201430024 | A | |
| | | | | TW | 201430025 | A | |
| | | | | TW | 201430026 | A | |
| | | | | CN | 104144976 | A | |
| | | | | TW | 201433596 | A | |
| | | | | TW | 201434956 | A | |
| | | | | TW | 201435023 | A | |
| | | | | KR | 10-2015-0099390 | A | |
| WO | 2017/030141 | A1 | 23 February 2017 | (Family: none) | | | |
| JP | 2020-200410 | A | 17 December 2020 | (Family: none) | | | |
| JP | 6974655 | B1 | 01 December 2021 | JP | 2022-23200 | A | |
| | | | | WO | 2021/201044 | A1 | |
| JP | 2002-275298 | A | 25 September 2002 | US | 2002/0137809 | A1 | |
| | | | | entire text | | | |
| WO | 2021/106914 | A1 | 03 June 2021 | WO | 2021/106910 | A1 | |
| | | | | WO | 2021/106911 | A1 | |
| | | | | WO | 2021/106912 | A1 | |
| | | | | WO | 2021/106913 | A1 | |
| | | | | CN | 114761473 | A | |
| | | | | CN | 114585670 | A | |
| | | | | CN | 114616278 | A | |
| | | | | CN | 114641521 | A | |
| | | | | CN | 114761474 | A | |
| | | | | KR | 10-2022-0106752 | A | |

Form PCT/ISA/210 (patent family annex) (January 2015)

**EP 4 495 170 A1**

**REFERENCES CITED IN THE DESCRIPTION**

**Patent documents cited in the description**

- JP 2012519750 A